(19) Europäisches Patentamt
European Patent Office
Office européen des brevets

(11) **EP 2 587 803 A1**

(12) **EUROPEAN PATENT APPLICATION**

(43) Date of publication:
**01.05.2013 Bulletin 2013/18**

(51) Int Cl.:
*H04N 7/26* (2006.01)          *H04N 7/46* (2006.01)
*H04N 7/50* (2006.01)

(21) Application number: **12188881.2**

(22) Date of filing: **17.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.10.2011 FR 1159779**

(71) Applicant: **Thomson Licensing**
**92130 Issy-les-Moulineaux (FR)**

(72) Inventors:
• **Francois, Edouard**
**35890 Bourg des-Comptes (FR)**

• **Thoreau, Dominique**
**35576 Cesson-Sévigné (FR)**
• **Bordes, Philippe**
**35576 Cesson-Sévigné (FR)**
• **Vieron, Jérôme**
**75015 Paris (FR)**

(74) Representative: **Lorette, Anne**
**Technicolor**
**1-5 Rue Jeanne d'Arc**
**92130 Issy-les-Moulineaux (FR)**

(54) **Methods for coding and reconstructing a pixel block and corresponding devices.**

(57)     A method for reconstructing a current block of N pixels is described. This method comprises the following steps for:
- decoding and de-quantizing (100) N residue coefficients;
- determining (100) N reference coefficients;
- reconstructing (110, 120, 130, 140, 160, 170) N coefficients for the current block from the N residue coefficients and N prediction coefficients determined from the N reference coefficients by taking account of an illumination variation model defined by at least one illumination variation parameter, said illumination variation parameter is refined on each reconstruction of k coefficients for the current block with k integer and $1 \leq k < N$; and
- transforming (180) the N reconstructed coefficients into a current block of N pixels.

FIGURE 1

**Description**

1. Scope of the invention

The invention relates to the general domain of image coding. More particularly, the invention relates to a method for reconstructing a pixel block of an image and a method for coding such a pixel block. The invention also relates to corresponding coding and decoding devices.

2. Prior art

The majority of methods for coding a sequence of images into a stream of coded data and methods for decoding this stream use temporal prediction or inter-image prediction and equally spatial prediction or intra-image prediction. Intra-image or inter-image prediction enables the compression of an image sequence to be improved. It comprises, for a current block, the generation of a prediction block and the coding of a difference, also called a residual block, between the current block and the prediction block. The more the prediction block is correlated with the current block, the lower is the number of bits required to code the current block and therefore the more effective is the compression. However, inter-image (respectively intra-image) prediction loses its efficiency when there is a luminosity variation between the images of the sequence (respectively in the current image). Such a brightness variation is for example due to a modification of illumination, to fade effects, to flashes, etc.

Methods for coding/decoding image sequences are known that account for a variation in luminosity. Hence, within the framework of the standard MPEG-4 AVC/H.264 described in the document ISO/IEC 14496-10, it is known to use a weighted prediction method in order to improve the compression in the case of a luminosity variation. For this purpose, the MPEG-4 AVC/H.264 standard enables the explicit transmission in the stream of weighted prediction parameters per image slice, an image slice comprising one or more blocks of pixels. The illumination correction by means of a weighted prediction parameter or a set of several weighted prediction parameters thus applies in the same way for all the blocks of the image slice with which the weighted prediction parameter or the set of weighted prediction parameters is associated. For example, the weighting parameter is determined for a current block $B_{cur}$ by calculating the ratio between the average of the current block $B_{cur}$ and the average of a reference block $B_{ref}$ associated with this current block using motion data such as a motion vector MV. The average of a block is for example the average of luminance values associated with the pixels of the block. The reference block is for example determined during a step of motion estimation. Such a prediction method is precise as the luminance variation for a current block is determined from values associated with the current block. However, such a method is costly in terms of bit rate as it implies the transmission in the stream of a set of weighted prediction parameters per image slice and thus potentially per block.

It is also known in the art to correct a local luminosity variation to determine the weighting parameters locally in the same way on the coder side and the decoder side. In this case, the weighting parameters are not transmitted explicitly in the stream. For example, a weighting parameter for the current block $B_{cur}$ is determined by calculating the ratio between the average of a neighbourhood Nc of the current block $B_{cur}$ and the average of a neighbourhood Nr of a reference block $B_{ref}$ associated with the current block $B_{cur}$. The average of the neighbourhood is for example the average of luminance values associated with the pixels of the neighbourhood in question. Nc is situated in the causal neighbourhood of the block $B_{cur}$. Nc is thus coded (respectively reconstructed) before Bc. Such a method is cheap in terms of bitrate as the weighted prediction parameters are not transmitted explicitly in the stream but are determined on the coder side and the decoder side in the same way. However, such a prediction method is less precise than the preceding method in that the weighting parameter(s) associated with the current block $B_{cur}$ do not take account of the contents of this block.

The international application WO2011012669 describes coding and decoding methods in which the prediction method takes account of the current block contents and adapts dynamically to local variations of illumination without having to explicitly code the parameters relating to these local variations. They also have the advantage of improving the coding efficiency in the case where no weighted prediction parameter is transferred in the stream. However, in WO2011012669, the weighting parameters are updated once from only the first reconstructed coefficient of the transform, i.e. the DC coefficient.

3. Summary of the invention

The purpose of the invention is to overcome at least one of the disadvantages of the prior art. For this purpose, the invention relates to a method for reconstructing a current block of N pixels with N integer. The method for reconstruction comprises the following steps for:

-    decoding and de-quantizing N residue coefficients;

- determining N reference coefficients;
- reconstructing N coefficients for the current block from the N residue coefficients and N prediction coefficients determined from the N reference coefficients by taking account of an illumination variation model defined by at least one illumination variation parameter, which illumination variation parameter is refined on each reconstruction of k coefficients for the current block with k integer and $1 \le k < N$; and
- transforming the N reconstructed coefficients into a current block of N pixels.

According to a particular embodiment, the step for reconstructing the N coefficients for the current block comprises the following steps for:

a) calculating k first prediction coefficients from the reference coefficients by taking account of the illumination variation model;
b) calculating k reconstructed coefficients from the k first residue coefficients and the k first calculated prediction coefficients;
c) refining the at least one illumination variation parameter from all the coefficients already reconstructed and the corresponding reference coefficients; and
d) reiterating steps a) to c) with the k following coefficients up to calculating N reconstructed coefficients.

According to another aspect of the invention, the reconstruction method comprises between steps c) and d) a step for refining all the coefficients already reconstructed from the at least one illumination variation parameter refined in step c) and the corresponding reference coefficients.

According to a particular characteristic of the invention, the value of k is equal to 1.

According to another particular characteristic of the invention, the value of k varies from an iteration to the other.

According to another particular characteristic of the invention, the value of k is equal to the distance between two non-null residue coefficients separated from null residue coefficients.

According to yet another particular characteristic of the invention, the value of k is equal to the distance between two residue coefficients greater than a threshold value separated from residue coefficients lower than the threshold value.

According to a particular aspect of the invention, the at least one refined illumination parameter is determined by minimizing the quadratic error weighted by the variance of the quantizing noise, the quadratic error being calculated between the reconstructed coefficients and the corresponding reference coefficients.

The invention also relates to a method for coding a current block of N pixels, with N integer which comprises the following steps for:

- transforming the current block into N current coefficients;
- determining N reference coefficients;
- calculating N residue coefficients from the N current coefficients and N prediction coefficients determined from the N reference coefficients by taking account of an illumination variation model defined by at least one illumination variation parameter, which illumination variation parameter is refined on each reconstruction of k coefficients of the current block with k integer and $1 \le k < N$;
- quantizing and coding the N residue coefficients

According to a particular embodiment, the step for calculating the N residue coefficients comprises the following steps for:

a) calculating k first prediction coefficients from the reference coefficients by taking account of an illumination variation model defined by at least one illumination variation parameter, with k integer equal to or greater than 1;
b) calculating k residue coefficients from the k first current coefficients and the k first prediction coefficients;
c) calculating k reconstructed coefficients from the k first quantized then de-quantized residue coefficients and the k first calculated prediction coefficients;
d) refining the at least one illumination variation parameter from all the coefficients already reconstructed and the corresponding reference coefficients; and
e) reiterating steps a) to d) with k following coefficients up to calculating N residue coefficients

According to a particular aspect of the invention, the coding method comprises between steps d) and e) a step for refining all the coefficients already reconstructed from the at least one illumination variation parameter refined in step d) and the corresponding reference coefficients.

Moreover, the invention relates to a device for decoding a stream representative of a current block of N pixels with N integer which comprises:

- means to decode and de-quantize N residue coefficients from the stream;
- means to determine N reference coefficients;
- means to reconstruct N coefficients for the current block from the N residue coefficients and N prediction coefficients determined from the N reference coefficients by taking account of an illumination variation model defined by at least one illumination variation parameter, which illumination variation parameter is refined on each reconstruction of k coefficients for the current block with k integer and $1 \leq k < N$; and
- means to transform the N reconstructed coefficients into a current block of N pixels.

Moreover, the invention relates to a coding device which comprises:

- means to transform the current block into N current coefficients;
- means to determine N reference coefficients;
- means to calculate N residue coefficients from the N current coefficients and N prediction coefficients determined from the N reference coefficients by taking account of an illumination variation model defined by at least one illumination variation parameter, which illumination variation parameter is refined on each reconstruction of k coefficients of the current block with k integer and $1 \leq k < N$;
- means to quantize and code the N residue coefficients

Advantageously, the coding and reconstruction methods according to the invention implement a refining of the illumination variation parameter or parameters so as to gradually adjust, as the coefficients of the reconstructed current block $B_{rec}$ are being calculated, the prediction block, which enables the coding efficiency to be improved These methods adapt regularly and precisely to the local variations of the signal properties, in particular illumination variations. in addition, they do not necessitate to explicitly code the illumination local variation parameter or parameters.

4. List of figures

The invention will be better understood and illustrated by means of non-restrictive embodiments and advantageous implementations, with reference to the accompanying drawings, wherein:

- figure 1 shows a reconstruction method according to the invention;
- figures 2 and 3 represent residue coefficients;
- figure 4 shows a coding method according to the invention;
- figure 5 illustrates a coding device according to the invention; and
- figure 6 shows a decoding device according to the invention.

5. Detailed description of the invention

The invention relates to a method for reconstructing a block of pixels of a sequence of images and a method for coding such a block. A picture sequence is a series of several pictures. Each picture comprises pixels or picture points with each of which at least one item of picture data is associated. An item of image data is for example an item of luminance data or an item of chrominance data.

The expression "brightness variation" is also known in English terminology as "luminance variation", "luminosity variation", "luminosity variation" or "illumination variation".

The term "motion data" is to be understood in the widest sense. It comprises the motion vectors and possibly the reference image indexes enabling a reference image to be identified in the image sequence. It can also comprise an item of information indicating the interpolation type that must be applied to the reference block to derive the prediction block.

The term "residual data" signifies data obtained after extraction of other data. This term is synonymous with the "residues" term. A residual block is a block of pixels with which residual data is associated.

The term "transformed residual data" signifies residual data to which a transform has been applied. A DCT ("Discrete Cosine Transform) is an example of such a transform described in chapter 3.4.2.2 of the book by I. E. Richardson called "H.264 and MPEG-4 video compression" published by J. Wiley & Sons in September 2003. The wavelet transform described in chapter 3.4.2.3 of the book by I. E. Richardson and the Hadamard transform are other examples. Such transforms "transform" a block of image data, for example residual luminance and/or chrominance data, into a "block of transformed data" also called a "block of frequency data" or a "block of coefficients". The block of coefficients generally comprises a low frequency coefficient known under the name of continuous coefficient or DC coefficient and high frequency coefficients known as AC coefficients.

The "prediction data" term means data used to predict other data. A prediction block is a block of pixels with which prediction data is associated.

A prediction block is obtained from a block or several blocks of the same image as the image to which belongs the block that it predicts (spatial prediction or intra-image prediction) or from one (mono-directional prediction) or several blocks (bi-directional prediction) of a different image (temporal prediction or inter-image prediction) of the image to which the block that it predicts belongs.

The term "image domain" represents the domain of pixels with which luminance and/or chrominance values are associated. The "frequency domain" or "transformed domain" represents the domain of coefficients. One changes from the image domain to the transformed domain by applying to the image a transform, for example a DCT and conversely from the transformed domain to the image domain by applying a reverse transform of the preceding one, for example an inverse DCT.

Hereafter, the coding and reconstruction methods are described with reference to a pixel block. It is clear that these methods can be applied on several blocks of an image and on several images of a sequence with a view to the coding respectively the reconstruction of one or more images.

The block data considered in the pixel domain are named $B_x^x$. In the proposed scheme, the block data considered in the transformed domain are named $C_x^x$. .

Let $B_{cur}$ be a current block to be reconstructed in inter image or intra image mode with prediction. Let $B_{ref}$ be the associated reference block. This reference block can be a block already reconstructed of the current image or a block of another image already reconstructed. This can also be a block constructed by interpolation from pixels already reconstructed of the current image or from pixels of another image already reconstructed. Indeed, in the case where $B_{ref}$ is a block identified in a reference image by a motion vector at a sub-pixel level of precision, the reference block $B_{ref}$ is interpolated.

The prediction block $B_{pred}$ is constructed according to a luminance local variation model of the linear type according to the reference block $B_{ref}$: $B_{pred}(x,y) = f[B_{ref}(x,y)]$ with for example $B_{pred}(x,y) = a + b.B_{ref}(x,y)$
where a and b are the illumination variation parameters and (x,y) are the coordinates of a pixel in the image.

According to the invention, the reconstruction of the current block $B_{cur}$ into a reconstructed block $B_{rec}$ is made in the transformed domain. Once all the coefficients of $B_{cur}$ are calculated in the transformed domain, an inverse transform is applied to generate the reconstructed block. According to the invention, on each reconstruction of one or more coefficient(s) of $B_{cur}$, the parameters of the brightness variation model are refined.

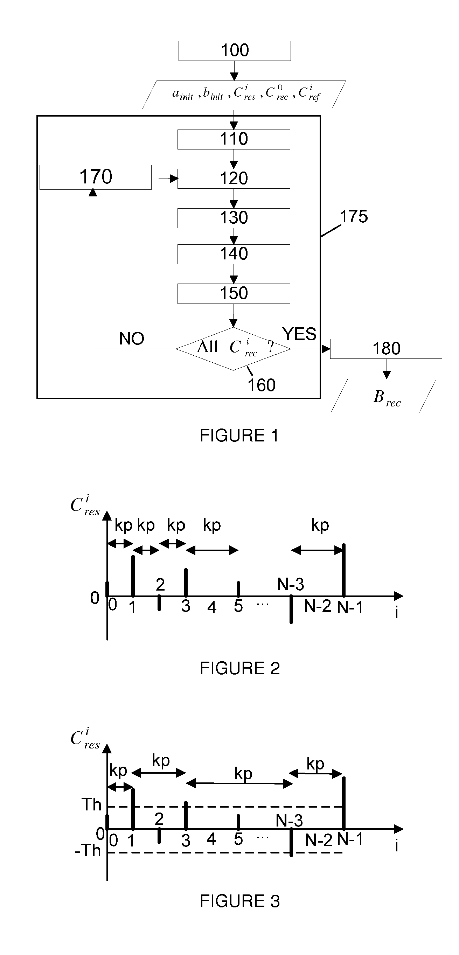

To do this, one bases on the linearity property of the transforms used typically in the coding schemes, which enables a direct link between the transformed coefficients and the parameters of the brightness variation model to be established. Unlike standard schemes, the block $B_{cur}$ is reconstructed in the transformed domain. The transform will therefore be applied to the reference block $B_{ref}$ from which a prediction block is determined in the transformed domain $C_{pred}$. A transformed residue block $C_{res}$ is added in it to generate a transformed reconstructed block $C_{rec}$. An inverse transform is applied to the reconstructed block in the transformed domain to generate the final reconstructed block $B_{rec}$. More precisely, the method for reconstructing the block $B_{cur}$ according to the invention comprises the following steps described with reference to figure 1 for:

- decoding and de-quantizing, step 100, N residue coefficients and determining N reference coefficients;
- reconstructing, step 175, N coefficients for the current block from the N residue coefficients and N prediction coefficients determined from the N reference coefficients by taking account of an illumination variation model defined by at least one illumination variation parameter, which illumination variation parameter is refined on each reconstruction of k coefficients for the current block with k integer and 1≤k<N; and
- transforming, step 180, the N reconstructed coefficients into a current block of N pixels.

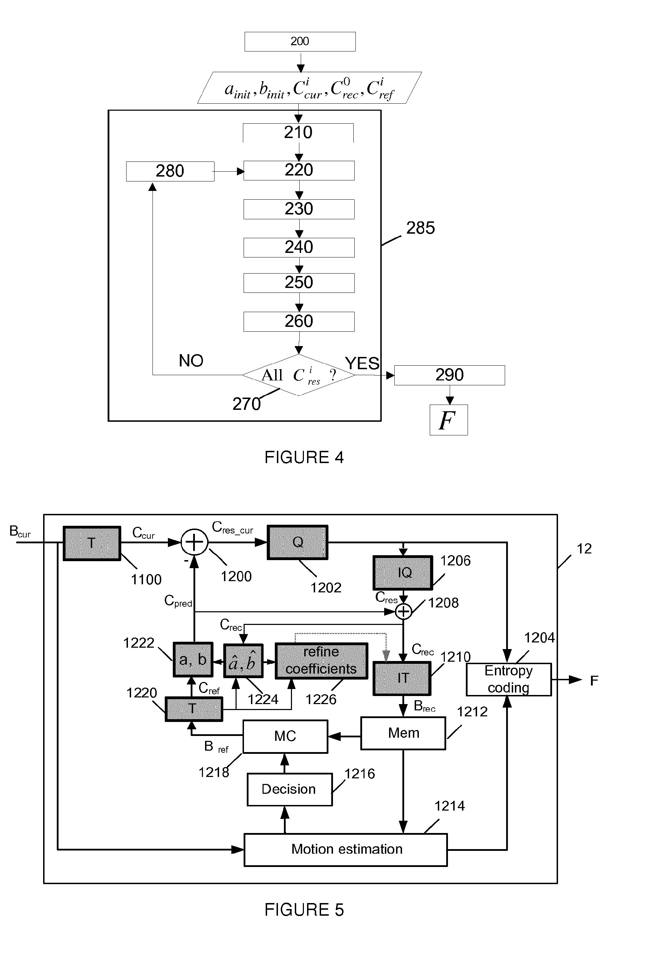

The method for reconstructing the block $B_{cur}$ according to the invention comprises the following steps described with reference to figure 4 for:

- transforming, step 200, the current block into N current coefficients and determining N reference coefficients;
- calculating, step 285, N residue coefficients from the N current coefficients and N prediction coefficients determined from the N reference coefficients by taking account of an illumination variation model defined by at least one illumination variation parameter, which illumination variation parameter is refined on each reconstruction of k coefficients of said current block with k integer and 1≤k<N;
- quantizing and coding, step 290, the N residue coefficients

Advantageously, the coding and reconstruction methods according to the invention implement a refining of the illumination variation parameters so as to gradually adjust, as the coefficients of the reconstructed current block $B_{rec}$ are being calculated, the prediction block, and in this way improve the coding efficiency. The illumination variation parameter or parameters are refined as the reconstruction of the coefficients of the current block $B_{rec}$ goes along. This means that these illumination variation parameters are more and more precise and consequently enable the prediction of the current block to be improved.

**Figure 1** shows a method for reconstructing a pixel block $B_{rec}$ according to a particular embodiment of the invention. $B_{rec}$ is the reconstructed current block $B_{cur}$.

During a step 100, a transformed residue block is decoded then de-quantized. The block thus obtained comprises residue coefficients $C_{res}^{i}$ with i=0...N-1, where N integer is the number of coefficients from the transform. In the case of a transform 8x8, N=64. Initial values of illumination variation parameters $a_{init}$ and $b_{init}$ are obtained as well as reference coefficients $C_{ref}^{i}$ of a reference block $B_{ref}$. The initial values of illumination variation parameters are for example decoded or else they are predefined, by example by a video coding standard and therefore known of the reconstruction method. The reference block $B_{ref}$ is determined in the image domain for example using a motion vector then transformed into a block of reference coefficients $C_{ref}^{i}$. Likewise, the first coefficient of the pixel block to be reconstructed $C_{rec}^{0}$ is reconstructed, for example, according to the following formula:

$$C_{rec}^{0} = a_{init} . D_0 + b_{init} C_{ref}^{0} + C_{res}^{0}$$

where $D_0 = \sum_{(x,y) \in Br} d_0(x,y)$ and $d_0(.)$ is the basis vector of index 0 of the transform and Br its support.

During a step 110, p is initialized to zero.

During a step 120, the prediction coefficients $C_{pred}^{i}$ for $i = p+1, \ldots , p+k_p$ , $k_p >= 1$ and $p+k_p < N$ are calculated, according to the following formula:

$$C_{pred}^{i} = a.D_i + b.C_{ref}^{i}$$

with: - $C_{pred}^{i}$ the transformed coefficient of index i of the prediction block still called prediction coefficient;

- $C_{ref}^{i}$ the transformed coefficient of index i of the reference block still called reference coefficient;

- $d_i(.)$ the basis vector of index i of the transform; and

- $D_i = \sum_{(x,y) \in Br} d_i(x,y)$, with Br the vector support $d_i(.)$

In general, the transform bases (for example, DCT - "Discrete Cosine Transform", DST - "Discrete Sinus Transform", FFT - "Fast Fourier Transform") are such that the first coefficient is a signal average, with $D_0 = 1$, and the following vectors of the transform are such that $D_i = 0$ for any $i > 0$.

According to a particular characteristic of the invention kp=1. According to another particular characteristic of the invention, kp has a predetermined value between 1 and N-1. According to a variant, the value of kp varies from an iteration to the other. It is, for example, equal to the distance between two non-null coefficients $C_{res}^{i}$ separated by null coefficients $C_{res}^{i}$ as shown on **figure 2,** the coefficient of index 0 being taken into account irrespective of its value. On this figure 2, the coefficients of index 4 and N-2 are null. According to yet another variant, the value of kp is equal to the distance between two coefficients $C_{res}^{i}$ of amplitude greater than a threshold value Th separated by coefficients $C_{res}^{i}$ of amplitude lower than this threshold value Th as shown on **figure 3,** the coefficient of index 0 being taken into account irrespective of its value. On this figure 3, the coefficients of index 1, 3, N-3 and N-1 have an amplitude greater than Th.

During a step 130, the coefficients reconstructed $C_{rec}^{i}$ for $i = p+1, \dots , p+k_{\mathrm{p}}$ are calculated from the prediction coefficients $C_{pred}^{i}$ and the residue coefficients $C_{res}^{i}$ according to the following formula:

$$
\begin{aligned}
C_{rec}^{i} &= C_{pred}^{i} + C_{res}^{i} \\
&= a.D_i + b.C_{ref}^{i} + C_{res}^{i}
\end{aligned}
$$

During a step 140, the parameters $a$ and $b$ are refined from the reconstructed coefficients $C_{rec}^{i}$ and their correspondents $C_{ref}^{i}$ in the reference block for $i=0$ at $p+k_{\mathrm{p}}$. The refined parameters are noted as $\hat{a}$ and $\hat{b}$. The illumination variation parameters can be refined by different methods. According to the first method, the refined illumination variation parameters $\hat{a}$ and $\hat{b}$ are obtained by minimizing the modelling quadratic error weighted by the variance of the quantization noise:

$$
\hat{a},\hat{b} = \arg \min_{a,b} \sum_{i=0}^{p+kp} (C_{rec}^{i} - a.D_i - b.C_{ref}^{i})^2 / Q_i^2
$$

Qi is the quantizing step of the coefficient of index i.
$\hat{a}$ and $\hat{b}$ are therefore obtained by a least squares method which leads to the resolution of a linear system with two unknowns and two equations.
In the case of standard transform bases (for example, DCT, DST, FFT) where the first vector of the transform base is such that $D_0=1$ and all the others are such that $D_i=0$ for any $i > 0$, the following equation system is obtained:

$$
\begin{bmatrix}
1/Q_0^2 & C_{ref}^{0}/Q_0^2 \\
C_{ref}^{0}/Q_0^2 & \sum_{i=0}^{p+kp}(C_{ref}^{i})^2/Q_i^2
\end{bmatrix}
\cdot
\begin{bmatrix} \hat{a} \\ \hat{b} \end{bmatrix}
=
\begin{bmatrix}
C_{rec}^{0}/Q_0^2 \\
\sum_{i=0}^{p+kp} C_{ref}^{i}.C_{rec}^{i}/Q_i^2
\end{bmatrix}
$$

and therefore

$$
\begin{bmatrix} \hat{a} \\ \hat{b} \end{bmatrix}
=
\begin{bmatrix}
1/Q_0^2 & C_{ref}^{0}/Q_0^2 \\
C_{ref}^{0}/Q_0^2 & \sum_{i=0}^{p+kp}(C_{ref}^{i})^2/Q_i^2
\end{bmatrix}^{-1}
\cdot
\begin{bmatrix}
C_{rec}^{0}/Q_0^2 \\
\sum_{i=0}^{p+kp} C_{ref}^{i}.C_{rec}^{i}/Q_i^2
\end{bmatrix}
$$

It is to be noted that for each new coefficient, only the terms $\sum_{i=0}^{p+kp}(C_{ref}^{i})^2/Q_i^2$ , $\sum_{i=0}^{p+kp} C_{ref}^{i}.C_{rec}^{i}/Q_i^2$ are updated before the resolution of the linear system.
According to a second method, the refined illumination variation parameters $\hat{a}$ and $\hat{b}$ are obtained by likelihood maximization.

The parameters $\hat{a}$ and $\hat{b}$ are those which maximize the likelihood of the coefficients $C_{cur}^{i}$ which are the exact coefficients (i.e. not quantized) knowing $a$ and $b$, $C_{ref}^{i}$ and $C_{rec}^{i}$ for $i=0$ at $p+kp$:

$$\hat{a},\hat{b} = \arg\max_{a,b} p\left(C_{cur}^0,...,C_{cur}^{p+kp} \Big/ C_{ref}^0,...,C_{ref}^{p+1}, C_{rec}^0,...,C_{rec}^{p+kp}, a,b\right) \quad C_{cur}^i$$

is approximated by $C_{ref}^i$ according to a linear model:

$$C_{cur}^i = a.D_i + b.C_{ref}^i + \varepsilon_i$$

where $\varepsilon_i$ is a noise supposed white gaussian non corelated of variance $\sigma_i^2$. As $C_{rec}^i = C_{cur}^i + n^i$, $n^i$ being a quantization noise, we have:

$$C_{rec}^i = a.D_i + b.C_{ref}^i + \varepsilon_i + n^i$$

The applied quantizing being a uniform quantizing, the quantization noise $n^i$ is uniform, of probability $1/Q_i$, $Q_i$ being the quantizing step used.

If it is assumed that $\varepsilon_i$ and $n_i$ are independent between them and irrespective of i, we therefore have:

$$p\left(C_{cur}^0,...,C_{cur}^{p+kp} \Big/ C_{ref}^0,...,C_{ref}^{p+kp}, C_{rec}^0,...,C_{rec}^{p+kp}, a,b\right) = \prod_{i=0}^{p+kp} p\left(C_{cur}^i \Big/ C_{ref}^i, C_{rec}^i, a,b\right)$$

$$= \prod_{i=0}^{p+kp} p\left(C_{rec}^i - (a.D_i + b.C_{ref}^i) = \varepsilon_i + n^i\right)$$

and

$$p\left(C_{rec}^i - (a.D_{p+1} + b.C_{ref}^i) = \varepsilon_i + n^i\right) = \frac{1}{Q_i} \sum_{k=-Q_i/2}^{Q_i/2} \exp\left(-\frac{\left(C_{rec}^i - (a.D_i + b.C_{ref}^i) - k\right)^2}{2\sigma_i^2}\right)$$

Whence finally the functional to be maximized with respect to a and b:

$$p\left(C_{cur}^0,...,C_{cur}^{p+kp} \Big/ C_{ref}^0,...,C_{ref}^{p+kp}, C_{rec}^0,...,C_{rec}^{p+kp}, a,b\right) = K.\prod_{i=0}^{p+kp} \sum_{k=-Q_i/2}^{Q_i/2} \exp\left(-\frac{\left(C_{rec}^i - (a.D_i + b.C_{ref}^i) - k\right)^2}{2\sigma_i^2}\right)$$

with K a parameter independent of a and b.

A resolution of the stochastic gradient type can be used to search this maximum.

According to a variant of this second method, the additive noise $n^i$ which intervenes in the formula $C_{rec}^i = C_{cur}^i + n^i$ is considered as being of the centred Gaussian type. In this particular case, the variance of this noise corresponds to the variance of the uniform quantization noise, i.e. $\sigma_i^2 = Q_i^2 / 12$.

The likelihood is then written:

$$p\left(C_{cur}^0,...,C_{cur}^{p+kp} / C_{ref}^0,...,C_{ref}^{p+kp}, C_{rec}^0,...,C_{rec}^{p+1}, a, b\right) = K.\prod_{i=0}^{p+kp} \exp\left(-\frac{\left(C_{rec}^i - a.D_i - b.C_{ref}^i\right)^2}{Q_i^2 / 6}\right)$$

with K a parameter independent of a and b.

The maximization of the likelihood with respect to *a* and *b* then amounts to a resolution to the weighted least squares such as that described above.

During an optional step 150, the coefficients already reconstructed are refined on the basis of the new illumination variation parameters $\hat{a}$ and $\hat{b}$, according to the equation:

$$C_{rec}^i = \hat{a}.D_i + \hat{b}.C_{ref}^i$$

for $i$=0 at $p+k_p$

According to one variant, this optional step is only implemented once when all the coefficients $C_{rec}^i$ for i=0 at N-1 are reconstructed.

During a step 160, there is a check to see if the N coefficients $C_{rec}^i$ of the current block B$_{cur}$ are reconstructed. If this is the case, the method continues at step 180 if not p is incremented at step 170: p=p+kp and the method continues at step 120.

During the step 180, the block of coefficients reconstructed in the transformed domain is transformed by an inverse transform into a reconstructed pixel block B$_{rec}$.

**Figure 4** shows the method for coding a current pixel block B$_{cur}$ according to a particular embodiment of the invention.

During a step 200, the current block B$_{cur}$ is transformed into a block of coefficients $C_{cur}^i$ for i=0..N-1. The first residue coefficient of the current block to be coded $C_{res}^0$ is calculated for example according to the following formula:

$$C_{res\_cur}^0 = C_{cur}^0 - a_{init}.D_0 - b_{init} C_{ref}^0$$

where $D_0 = \sum_{(x,y)\in Br} d_0(x,y)$ and $d_0(.)$ is the basis vector of index 0 of the transform. a$_{init}$ and b$_{init}$ are initial values of illumination variation parameters. These initial values of illumination variation parameters are for example coded to be transmitted to the reconstruction method or else they are predefined, by example by a video coding standard and therefore known of the reconstruction method. Coefficients $C_{ref}^i$ of a reference block B$_{ref}$ are also obtained. The reference block B$_{ref}$ is determined in the image domain for example using a motion vector then transformed into a block of coefficients $C_{ref}^i$.

During a step 210, p is initialized to zero.

During a step 220, the prediction coefficients $C_{pred}^i$ for $i = p+1, ... , p+k_p$, $k_p$>=1 and $p+k_p$<N are calculated, according to the following formula:

$$C_{pred}^i = a.D_i + b.C_{ref}^i$$

During a step 230, residue coefficients $C^i_{res\_cur}$ for $i = p+1, \ldots, p+k_p$ are calculated:

$$C^i_{res\_cur} = C^i_{cur} - a.D_i - b.C^i_{ref} \quad .$$

During a step 240, coefficients reconstructed $C^i_{rec}$ for $i = p+1, \ldots, p+k_p$ are calculated from the prediction coefficients $C^i_{pred}$ and the residue coefficients quantized then de-quantized $C^i_{res}$ according to the following formula:

$$\begin{aligned} C^i_{rec} &= C^i_{pred} + C^i_{res} \\ &= a.D_i + b.C^i_{ref} + C^i_{res} \end{aligned}$$

$C^i_{res} = ((C^i_{res\_cur})^Q)^{Q^{-1}}$ $Q$ and $Q^{-1}$ representing respectively the quantization then inverse quantization operations.

During a step 250, the parameters $a$ and $b$ are refined from the reconstructed coefficients $C^i_{rec}$ and their correspondents in the reference block for $i=0$ at $p+k_p$. The refined parameters are noted as $\hat{a}$ and $\hat{b}$. This step is identical to the step 140.

During an optional step 260, the coefficients already reconstructed are refined on the basis of the new illumination variation parameters $\hat{a}$ and $\hat{b}$, according to the equation:

$$C^i_{rec} = \hat{a}.D_i + \hat{b}.C^i_{ref}$$

for $i=0$ at $p+ k_p$

This step is identical to the step 150.

According to one variant, this optional step 260 is only implemented once when all the coefficients $C^i_{rec}$ for i=0 at N-1 are reconstructed.

During a step 270, there is a check to see if all the residue coefficients $C^i_{res}$ of the transformed residue block are calculated. If this is the case, the method continues at step 290 if not p is incremented at step 280: p=p+kp and the method continues at step 220.

During the step 290, the residue coefficients $C^i_{res\_cur}$ are quantized are coded by entropy coding in a stream F. The block of coefficients reconstructed $C^i_{rec}$ in the transformed domain is then transformed by an inverse transform into a reconstructed pixel block B$_{rec,}$, this pixel block being itself able to be used afterwards, spatially or temporally, as a reference as is done typically in video prediction.

These coding and reconstruction methods allow a permanent and much more precise prediction adaptation to the local variations of the signal properties, in particular of the illumination variations. In addition, according to these methods, it is not necessary to code respectively decode explicitly local illumination variation parameters.

The steps 140 and 240 for refining the prediction model can apply for a model other than the linear model of type B$_{pred}$(x,y) = a + b.B$_{ref}$(x,y). The invention can be generalized to other models B$_{pred}$(x,y) = f [ B$_{ref}$(x,y) ], where f [.] is a function describing the temporal variation of the video signal.

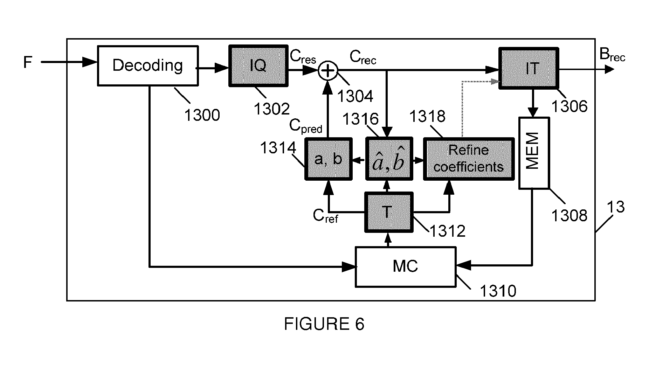

The invention also relates to a coding 12 described with reference to **figure 5** and a decoding 13 device described with reference to **figure 6** whose structure is modified to operate the prediction in the transformed domain in order to refine the illumination variation parameters. In these figures, the greyed modules are modules added or modified with respect to a standard coding respectively decoding scheme. In figures 5 and 6, the modules shown are functional units that may or may not correspond to physically distinguishable units. For example, these modules or some of them can be grouped together in a single component, or constitute functions of the same software. On the contrary, some modules may be composed of separate physical entities.

With reference to **figure 5,** the coding device 12 receives at input images belonging to a sequence of images. Each image is divided into pixel blocks $B_{cur}$ with each of which at least one item of picture data is associated. The coding device 12 notably implements a coding with temporal prediction. Only the modules of the coding device 12 relating to coding by temporal prediction or INTER coding are represented in figure 3. Other modules not represented and known to those skilled in the art of video coders implement the INTRA coding with or without spatial prediction. The coding device 12 notably comprises a module 1100 for transforming T able to transform the current block $B_{cur}$ into a transformed block $C_{cur}$ and a calculation module 1200 able to extract, for example by subtraction, coefficient by coefficient, from the transformed block $C_{cur}$ a prediction block $C_{pred}$ to generate a residue block $C_{res\_cur}$ in the transformed domain. The transform T is for example a Discrete Cosine Transform (or "DCT"). It also comprises a module 1202 able to quantize the residue block calculated in the transformed domain in quantized coefficients. The coding device 12 also comprises an entropy coding module 1204 able to code the quantized coefficients in a stream F. It also comprises a module 1206 carrying out the reverse operation to module 1202. The module 1206 performs an inverse quantization IQ to generate residue coefficients $C_{res}$ which are de-quantized. The module 1206 is connected to a calculation module 1208 able to merge, for example by addition, coefficient by coefficient, the residue coefficient block $C_{res}$ from the module 1206 and the prediction block $C_{pred}$ to generate a block reconstructed in the transformed domain $C_{rec}$. The calculation module 1208 is connected to an inverse transform module 1210 able to transform the block reconstructed into the transformed domain $C_{rec}$ into a reconstructed image data block noted as $B_{rec}$ which is stored in a memory 1212.

The coding device 12 further comprises a motion estimation module 1214 capable of estimating at least one motion vector between the block $B_{cur}$ and a block of a reference picture $I_{ref}$ stored in the memory 1212, this picture having previously been coded then reconstructed. According to one variant, the motion estimation can be made between the current block $B_{cur}$ and the original reference image $I_{cur}$ in which case the memory 1212 is not connected to the motion estimation module 1214. According to a method well known to those skilled in the art, the motion estimation module searches in the reference image $I_{ref}$ an item of motion data, specifically a motion vector, so as to minimize an error calculated between the current block $B_{cur}$ and a block in the reference image $I_{ref}$ identified using the item of motion data.

The determined items of motion data are transmitted by the motion estimation module 214 to a decision module 1216 capable of selecting a coding mode for the block $B_{cur}$ in a predefined set of coding modes. The chosen coding mode is for example the one that minimizes a bitrate-distortion type criterion. However, the invention is not restricted to this selection method and the mode retained can be selected according to another criterion for example an a priori type criterion. The coding mode selected by the decision module 1216 as well as the motion data, for example the motion data in the case of the temporal prediction mode or INTER mode are transmitted to a motion compensation module 1218. The coding mode selected and if need be the motion data are also transmitted to the entropy coding module 1204 to be coded in the stream F. The motion compensation module 1218 determines the reference block $B_{ref}$ from the coding mode determined by the decision module 1216 and possibly from the motion data determined by the motion estimation module 1214 (inter-images prediction). The motion compensation module 1218 is connected to a transformation module 1220 identical to the transformation module 1100. The transformation module 1220 is capable of transforming the reference block $B_{ref}$ obtained in the image domain into a transformed reference block $C_{ref}$. The transformation module 1220 is connected to a prediction calculation module 1222 which is capable of generating the prediction block $C_{pred}$ from illumination variation parameters. The transformation module 1220 is also connected to a module 1224 capable of refining the illumination variation parameters according to the step 250 of the coding method and optionally to a module 1226 capable of refining, according to the step 260 of the coding method, the coefficients already reconstructed on the basis of the refined illumination variation parameters.

With reference to **figure 6,** the decoding module 13 receives at input a stream F of coded data representative of a sequence of images. The stream F is for example transmitted by a coding device 12 via a channel. The decoding device 13 comprises an entropy decoding module 1300 able to generate decoded data, for example coding modes and decoded data relating to the content of the images.

The decoding device 13 further comprises a motion data reconstruction module. According to a first embodiment, the motion data reconstruction module is the entropy decoding module 1300 that decodes a part of the stream F representative of said motion data. According to a variant not shown in figure 6, the motion data reconstruction module is a motion estimation module. This solution for reconstructing motion data via the decoding device 13 is known as "template matching".

The decoded data relative to the contents of the images are then transmitted to a module 1302 capable of performing an inverse quantization to generate residue coefficients $C_{res}$. The module 1302 is identical to the module 1206 of the coding device 12 having generated the coded stream F. The module 1302 is connected to a calculation module 1304 capable of merging, for example by addition coefficient by coefficient a block of residue coefficients $C_{res}$ from the module 1302 and a prediction block $C_{pred}$ to generate a current block $C_{rec}$ reconstructed in the transformed domain. The current block $C_{rec}$ reconstructed in the transformed domain is transformed into a block reconstructed in the image domain $B_{rec}$ by an inverse transform module 1306 identical to the module 1210 of the coding device. The inverse transform module 1306 is connected to a memory1308 in which the data reconstructed in the image domain are stored in particular. The decoding device 13 further comprises a motion compensation module 1310. The motion compensation module 1310 determines the reference block $B_{ref}$ from the coding mode decoded for the current block by the entropy decoding module 1300 and possibly from the motion data determined by the motion data reconstruction module. The motion compensation module 1310 is connected to a transformation module 1312 identical to the transformation module 1220 of the coding device. The transformation module 1312 is capable of transforming the reference block $B_{ref}$ obtained in the image domain into a transformed reference block $C_{ref}$. The transformation module 1312 is connected to a prediction calculation module 1314 which is capable of generating the refined prediction block $C_{pred}$ from the illumination variation parameters. The transformation module 1312 is also connected to a refining module 1316 capable of refining the illumination variation parameters according to the step 140 of the reconstruction method and optionally to a module 1318 capable of refining, according to the step 150 of the reconstruction method, the coefficients already reconstructed on the basis of the refined illumination variation parameters.

The coding and decoding devices according to the invention are for example implemented in various forms of hardware, software, firmware, special purpose processors, or a combination thereof. Preferably, the present principles may be implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof) that is executed via the operating system. In addition, various other peripheral devices may be connected to the computer platform such as an additional data storage device and a printing device.

According to variants, the coding and decoding devices according to the invention are implemented according to a purely hardware realisation, for example in the form of a dedicated component (for example in an ASIC (Application Specific Integrated Circuit) or FPGA (Field-Programmable Gate Array) or VLSI (Very Large Scale Integration) or of several electronic components integrated into a device or even in a form of a mix of hardware elements and software elements.

## Claims

1. Method for reconstructing a current block of N pixels with N integer **characterized in that** it comprises:

   - decoding and de-quantizing (100) N residue coefficients;
   - determining (100) N reference coefficients;
   - reconstructing (175) iteratively N coefficients for said current block from the N residue coefficients and from N prediction coefficients determined from the N reference coefficients by using an illumination variation model defined by at least one illumination variation parameter, which illumination variation parameter is refined on each reconstruction of k coefficients for said current block with k integer and $1 \leq k < N$; and
   - transforming (180) the N reconstructed coefficients into a current block of N pixels.

2. Method for reconstruction according to claim 1, wherein the step of reconstruction of said N coefficients for said current block comprises:

   a) calculating (110, 120) k first prediction coefficients from the reference coefficients by taking account of said illumination variation model;
   b) calculating (130) k coefficients reconstructed from the k first residue coefficients and the k first calculated prediction coefficients;
   c) refining (140) said at least one illumination variation parameter from all the coefficients already reconstructed and from the corresponding reference coefficients; and
   d) reiterating (160, 170) steps a) to c) with the k following coefficients up to calculating N reconstructed coefficients.

3. Method for reconstruction according to claim 1, which comprises between steps c) and d) a step (150) for refining all the coefficients already reconstructed from said at least one illumination variation parameter refined in step c) and from the corresponding reference coefficients.

**4.** Method for reconstruction according to claim 2 or 3, wherein the value of k is equal to 1.

**5.** Method for reconstruction according to one of claims 2 to 3, wherein the value of k varies from one iteration to the other.

**6.** Method for reconstruction according to claim 5, wherein the value of k is equal to the distance between two non-null residue coefficients separated by null residue coefficients.

**7.** Method for reconstruction according to claim 5, wherein the value of k is equal to the distance between two residue coefficients greater than a threshold value separated by residue coefficients lower than said threshold value.

**8.** Method for reconstruction according to one of the preceding claims, wherein said at least one refined illumination parameter is determined by minimizing the quadratic error weighted by the variance of a quantizing noise, said quadratic error being calculated between the reconstructed coefficients and the corresponding reference coefficients.

**9.** Method for coding a current block of N pixels with N integer **characterized in that** it comprises:

- transforming (200) said current block into N current coefficients;
- determining (200) N reference coefficients;
- calculating (285) iteratively N residue coefficients from the N current coefficients and from N prediction coefficients determined from the N reference coefficients by using an illumination variation model defined by at least one illumination variation parameter, which illumination variation parameter is refined on each reconstruction of k coefficients of said current block with k integer and $1 \leq k < N$;
- quantizing and coding (290) the N residue coefficients.

**10.** Method for coding according to claim 6, wherein the step for calculating said N residue coefficients comprises:

a) calculating (220) k first prediction coefficients from the reference coefficients by taking account said illumination variation model;
b) calculating (230) k residue coefficients from the k first current coefficients and said k first calculated prediction coefficients;
c) calculating (240) k coefficients reconstructed from the k first quantized then de-quantized residue coefficients and from the k first calculated prediction coefficients;
d) refining (250) said at least one illumination variation parameter from all the coefficients already reconstructed and the corresponding reference coefficients; and
e) reiterating (270, 280) steps a) to d) with k following coefficients up to calculating N residue coefficients

**11.** Method for coding according to claim 10, which comprises between steps d) and e) a step (260) for refining all the coefficients already reconstructed from said at least one illumination variation parameter refined in step d) and the corresponding reference coefficients.

**12.** Device for decoding a stream representative of a current block of N pixels with N integer **characterized in that** it comprises:

- means for decoding and de-quantizing (1300, 1302) N residue coefficients from said stream;
- means for determining (1308, 1310, 1312) N reference coefficients;
- means for reconstructing (1304, 1314, 1316, 1318) iteratively N coefficients for said current block from the N residue coefficients and from N prediction coefficients determined from the N reference coefficients by using an illumination variation model defined by at least one illumination variation parameter, which illumination variation parameter is refined on each reconstruction of k coefficients for said current block with k integer and $1 \leq k < N$; and
- means for transforming (1306) the N reconstructed coefficients into a current block of N pixels.

**13.** Decoding device according to claim 12, said decoding device being adapted to execute the steps of the method for reconstruction according to one of claims 1 to 8.

**14.** Coding device for coding a current block of N pixels with N integer **characterized in that** it comprises:

- means for transforming (1100) said current block into N current coefficients;

- means for determining (1212, 1214, 1216, 1218, 1220) N reference coefficients;
- means for calculating (1200, 1222, 1224, 1226) iteratively N residue coefficients from the N current coefficients and from N prediction coefficients determined from the N reference coefficients by using an illumination variation module defined by at least one illumination variation parameter, which illumination variation parameter is refined on each reconstruction of k coefficients of said current block with k integer and $1 \leq k < N$;
- means for quantizing and coding (1202, 1204) the N residue coefficients.

15. Coding device according to claim 14, said coding device being adapted to execute the steps of the coding method according to one of claims 9 to 11.

EP 2 587 803 A1

$a_{init}, b_{init}, C_{res}^{i}, C_{rec}^{0}, C_{ref}^{i}$

100

110

170 → 120

130

140

150

175

All $C_{rec}^{i}$ ? 160

NO  YES

180

$B_{rec}$

FIGURE 1

$C_{res}^{i}$

kp kp kp  kp          kp

0  0 1 2 3 4 5 ⋯ N-3 N-2 N-1  i

FIGURE 2

$C_{res}^{i}$

kp  kp    kp    kp

Th

0  0 1 2 3 4 5 ⋯ N-3 N-2 N-1  i

-Th

FIGURE 3

15

$$a_{init}, b_{init}, C^i_{cur}, C^0_{rec}, C^i_{ref}$$

200

210

280 → 220

230

240

250

260

285

NO        All $C^i_{res}$ ?        YES        290

270

$F$

FIGURE 4

$B_{cur}$ → T → $C_{cur}$ → ⊕ → $C_{res\_cur}$ → Q → IQ

1100        1200        1202        1206

$C_{res}$        1208

$C_{pred}$

$C_{rec}$

1222        a, b        $\hat{a}, \hat{b}$        refine coefficients        IT        $C_{rec}$        1210

1220        T        $C_{ref}$        1224        1226        $B_{rec}$        1212

MC        Mem

$B_{ref}$        1218

Decision        1216

1214

Motion estimation

12

$C_{rec}$

1204

Entropy coding → F

FIGURE 5

16

FIGURE 6

**Europäisches Patentamt**
**European Patent Office**
**Office européen des brevets**

# EUROPEAN SEARCH REPORT

Application Number

EP 12 18 8881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2011/012669 A2 (THOMSON LICENSING [FR]; THOREAU DOMINIQUE [FR]; FRANCOIS EDOUARD [FR];) 3 February 2011 (2011-02-03)<br>* page 1, line 27 - page 2, line 25 *<br>* page 3, line 11 - line 28 *<br>* page 5, line 11 - page 8, line 25; figure 2 *<br>* page 10, line 6 - line 12 *<br>* page 10, line 24 - line 32 * | 1-3,9, 12-15 | INV.<br>H04N7/26<br>H04N7/46<br>H04N7/50 |
| X | PHILIPPE BORDES (TECHNICOLOR): "Weighted Prediction",<br>5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 );<br>URL: HTTP://WFTP3.ITU.INT/AV-ARCH/JC TVC-SITE/,,<br>no. JCTVC-E041, 4 March 2011 (2011-03-04),<br>XP030008547,<br>ISSN: 0000-0007<br>* page 1, paragraph 2 - page 2, paragraph 3 * | 1,9,12, 14 | |
| A | C-W SEO ET AL: "Pixel Based Illumination Compensation",<br>6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 );<br>URL:<br>HTTP://WFTP3.ITU.INT/AV-ARCH/JCTVC-SITE/,,<br>no. JCTVC-F417, 16 July 2011 (2011-07-16),<br>XP030009440,<br>* page 2, paragraph 2 - page 4, paragraph 3 * | 1-15 | TECHNICAL FIELDS SEARCHED (IPC)<br><br>H04N |

The present search report has been drawn up for all claims

| Place of search | Date of completion of the search | Examiner |
|---|---|---|
| Munich | 21 November 2012 | Moschetti, Fulvio |

EPO FORM 1503 03.82 (P04C01)

**ANNEX TO THE EUROPEAN SEARCH REPORT
ON EUROPEAN PATENT APPLICATION NO.**

EP 12 18 8881

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2012

| Patent document cited in search report | Publication date | Patent family member(s) | Publication date |
|---|---|---|---|
| WO 2011012669 A2 | 03-02-2011 | CN 102474608 A | 23-05-2012 |
| | | EP 2460355 A2 | 06-06-2012 |
| | | FR 2948845 A1 | 04-02-2011 |
| | | KR 20120039675 A | 25-04-2012 |
| | | US 2012128068 A1 | 24-05-2012 |
| | | WO 2011012669 A2 | 03-02-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011012669 A

**Non-patent literature cited in the description**

- **I. E. RICHARDSON.** H.264 and MPEG-4 video compression. J. Wiley & Sons, September 2003